Europäisches Patentamt

European Patent Office

Office européen des brevets

(11) Publication number: **0 059 274 B2**

(12) # NEW EUROPEAN PATENT SPECIFICATION

(45) Date of publication of the new patent specification: 05.10.94

(51) Int. Cl.⁵: **B32B 27/18**, B32B 27/30, B65D 65/40

(21) Application number: **81300818.2**

(22) Date of filing: **27.02.81**

The file contains technical information submitted after the application was filed and not included in this specification

(54) **A multi-layer polymeric structure having a moisture sensitive polymeric layer.**

(43) Date of publication of application: **08.09.82 Bulletin 82/36**

(45) Publication of the grant of the patent: **03.12.86 Bulletin 86/49**

(45) Mention of the opposition decision: **05.10.94 Bulletin 94/40**

(84) Designated Contracting States: **AT BE CH DE FR GB IT LI LU NL SE**

(56) References cited:
GB-A- 920 078          GB-A- 1 199 843
GB-A- 1 384 791        JP-A- 5 457 580
JP-A-54 110 282        JP-A-54 152 087
JP-A-54 156 082        US-A- 4 058 647
US-A- 4 082 854        US-A- 4 407 897
US-A- 4 464 443

(73) Proprietor: **AMERICAN NATIONAL CAN COMPANY**
**8770 West Bryn Mawr Avenue**
**Chicago, Illinois 60631 (US)**

(72) Inventor: **Farrell, Christopher John**
**431 South Evergreen Avenue**
**Arlington Heights Illinois 60005 (US)**
Inventor: **Tsai, Boh Chang**
**101 Alder Court**
**Rolling Meadows Illinois 60008 (US)**
Inventor: **Wachtel, James Alan**
**990 Crofton Lane**
**Buffalo Grove Illinois 60090 (US)**

(74) Representative: **MacGregor, Gordon**
**ERIC POTTER & CLARKSON**
**St. Mary's Court**
**St. Mary's Gate**
**Nottingham, NG1 1LE (GB)**

EP 0 059 274 B2

## Description

The present invention relates to a multi-layer polymeric structure having a moisture sensitive polymeric layer.

Such multi-layer polymeric structures are suitable for flexible and rigid packaging for food. Flexible multi-layer films are used for pouches, bags, and wraps. Thicker multi-layer structures can be formed into shape-retaining containers in the shapes and sizes common for metal cans. Sufficient impermeability to oxygen throughout the expected storage life of the packaged product is a necessity. Most economically practical polymers suitable for packaging purposes are relatively poor oxygen barriers. Consequently, an interior layer of a polymer impermeable to oxygen is desired. Among the favored candidate polymers for barrier layers are ethylenevinyl alcohol (EVOH) copolymers which are excellent oxygen barriers, but quite moisture sensitive, and above a relatively modest moisture content, rapidly begin to lose oxygen barrier quality. There are several opportunities for intrusion of moisture into the barrier layer from the packaged food itself, from storage in moist air and from water vapor present in commercial sterilisation processes.

The present invention aims to protect the moisture sensitive oxygen barrier layer from the adverse effects of moisture, and to maintain its water content at a low enough level so as to preserve the oxygen barrier qualities thereof adequately for a prolonged period.

According to the present invention, there is provided a multi-layer laminate structure for retortable packaging, comprising an ethylene-vinyl alcohol copolymer layer the oxygen permeability of which increases substantially upon moisture entering the polymer, characterised in that the barrier polymer layer is an interior layer of the structure and a water soluble water absorbing agent is dispersed in another polymeric layer of the structure, which agent, after retorting a package made from the structure for at least two hours at 250°F (121°C), maintains an oxygen permeability of the barrier polymer layer of no more than 0.35 ml per day per 100 sq. inches (645 cm²) when the pressure gradient is one atmosphere of oxygen per mil (0.025 mm) of thickness of said barrier polymer layer.

Also according to the present invention, there is provided a multi-layer laminate structure for retortable packaging, comprising an ethylene-vinyl alcohol copolymer layer the oxygen permeability of which increases substantially upon moisture entering the polymer, characterised in that the barrier polymer layer is an interior layer of the structure and a water soluble water absorbing agent is incorporated in a layer of the structure, which agent, after retorting a package made from the structure for at least two hours at 250°F (121°C), maintains an oxygen permeability of the barrier polymer layer of no more than 0.35 ml per day per 100 sq. inches (645 cm²) when the pressure gradient is one atmosphere of oxygen per mil (0.025 mm) of thickness of said barrier polymer layer.

GB-A-1,199,843 discloses packaging materials specifically for packaging photographic films and proposes that certain black resin coating materials should contain desiccants to enable a packaging substrate to be opaquely coated in a manner avoiding the formation of holes, bubbles or other imperfections which render the packaging useless for light-sensitive materials. This patent neither addresses nor even recognises the moisture problem which the present invention solves and the problem the prior patent sought to overcome is self-evidently wholly different from that facing the present applicants.

GB-A-1,384,791 discloses a packaging laminate having an anhydrous polyvinyl alcohol (PVOH) oxygen barrier layer. This barrier layer is described as being associated with a polyurethane-based primer, the function of which is said to remove small amounts of water present in the PVOH during manufacture. From our experience, polyurethanes do not absorb significant amounts of water. Moreover, the commercially-available material cited in this patent as a suitable primer is not in fact a polyurethane, though it can be converted into one. The manufacturers of the cited commercially available material have stated that it is essentially unreactive with water, and certainly not nearly as reactive with water as a polyurethane.

The water-absorbing agent can advantageously be contained in adhesive layers which bond the moisture sensitive layer to other layers of the structure. The said other layers can be outer layers and may be mainly responsible for conferring the necessary integrity or strength to the structure.

The invention is described in more detail below by way of example with reference to the accompanying drawings in which:

Figure 1 is a graph of oxygen permeability as a function of water content for EVOH.

Figure 2 is an enlarged cross-sectional view of a multi-layer polymeric structure, suitable for food packaging, to which this invention is applicable.

Figure 3 is a graph of water content as a function of retort time for an EVOH layer in a multi-layer package, and

Figure 4-7 are graphs, or isotherms, for various types of drying agents, illustrating the variation of drying ability of a desiccant with the water activity or humidity of the surroundings.

Vinyl alcohol polymers and copolymers are excellent oxygen barrier materials, as noted above.

Substantially fully hydrolyzed ethylene-vinyl alcohol copolymers (EVOH) have rheological properties which allow them to be coextruded with common packaging polymers, and so EVOH represents preferred polymeric material for use as an oxygen barrier layer in both rigid and flexible multi-layer polymeric structures for packaging. EVOH is a relatively expensive polymer, costing as much as eight times the cost of polymers commonly used in packaging. Its cost dictates the use of a very thin layer of EVOH. A layer of dry EVOH less than one-thousandth of an inch (1 mil) or 0.025 mm can provide sufficient protection from oxygen to permit storage of some foods for more than one year.

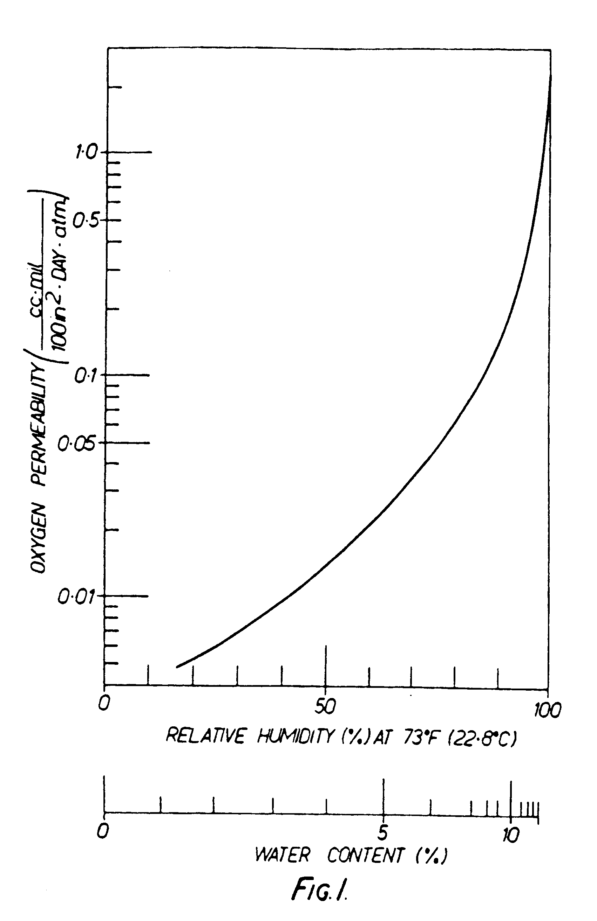

EVOH materials are moisture sensitive polymers. The oxygen barrier quality of an EVOH layer is degraded by the presence of moisture in the layer. Figure 1 is a plot of oxygen permeability of EVOH as a function of moisture or water content. The oxygen permeability is presented in cubic centimeters per day for a film area of 100 square inches (645 $cm^2$) at a pressure gradient of one atmosphere $O_2$ per mil (0 025 mm) of film thickness, that is:

$$O_2 \text{ permeability} = \frac{cc \cdot mil}{100 \text{ in}^2 \cdot day \cdot atm}$$

The moisture or water content is presented as the weight percentage of water in the EVOH and is also presented as "water activity". Water activity is most simply defined as the water vapor pressure exerted by a substance divided by the vapor pressure of pure water at the same temperature and pressure. When expressed as a percentage, water activity is often called "relative humidity". A strict thermodynamic definition of "water activity" is discussed in such standard texts as "Thermodynamics" by Lewis and Randall (1923). It should be noted that oxygen permeability is plotted on a logarithmic scale in Figure 1. There is a tenfold increase in permeability between a water content of about 3 percent and 7 percent and over a hundredfold increase between about 3 percent and 12 percent. Thus, a moisture content in excess of about 7 percent causes rapid degradation of the oxygen barrier quality of the EVOH. Food packaging economics favor an oxygen permeability of 0.1 or less, again expressed in the above described units. The cost of EVOH dictates the use of thin layers when very small quantities of water cause a significant increase in water activity. This causes the oxygen permeability to exceed desired limits. EVOH is hydrophilic and extracts moisture from the surroundings.

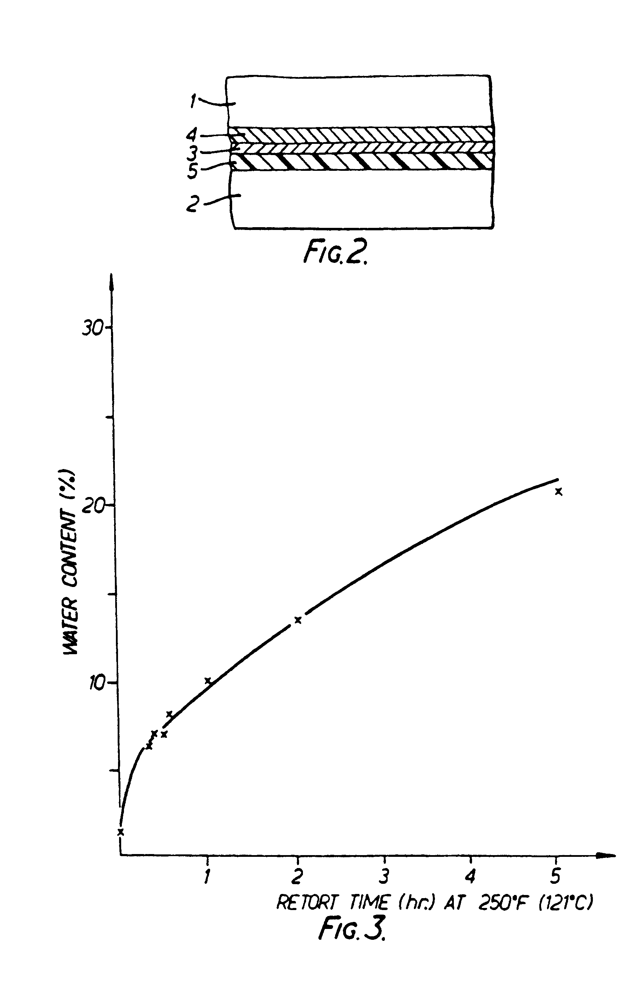

To protect the EVOH layer from moisture, it is buried between inner and outer layers of moisture barrier polymers such as polyethylene, polypropylene, or blends of the two. Figure 2 is an enlarged cross-sectional view of a typical multi-layer container wall. The polyolefin structural layers 1 and 2 are adhered to the EVOH oxygen barrier layer 3 by adhesive layers 4 and 5. The adhesive layers 4, 5 may be a modified polyolefin such as those solid under the name Plexar® by Chemplex Corp. of Rolling Meadows. Illinois. Suitable EVOH polymeric materials having vinyl alcohol contents of approximately 70 mole percent are sold under the name EVAL by Kuraray Chemical Co., Ltd., and also by Nippon Goshei Co. Ltd. under the names GLD and GLE. Polyolefins are good moisture barriers at and below expectable normal ambient temperatures and thus serve to insulate the interior EVOH layer from moisture. However, at elevated temperatures polyolefins increasingly become more permeable to moisture. Many foods are retorted in the package or container to achieve commercial sterility. The ability to subject a filled food package to retort conditions of 250°F (121°C) or more for one half-hour or more in the presence of steam or water (under pressure) is a practical necessity. Retort conditions significantly increase the moisture permeability of polyolefins and allow moisture to enter the EVOH layer. Return of the package to room temperature restores the moisture impermeability of the polyolefin, thereby entrapping the moisture in the EVOH layer. The amount of moisture thus entrapped easily can exceed a water content of about 7 percent (water activity of about 0.9 at room temperature) thereby resulting in an oxygen barrier quality inadequate for many purposes.

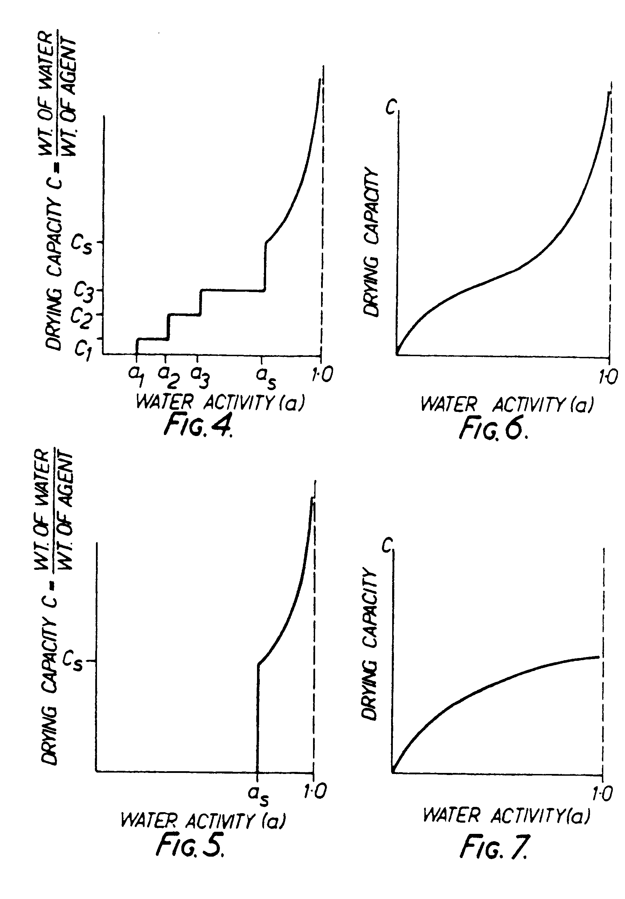

Figure 3 records the moisture absorbed by an EVOH layer buried in polyolefin inner and outer layers of a multi-layer rigid container of can shape. The water content is plotted as a function of time in a retort at 250°F (121°C). It can be observed that at all retort times above less than one half-hour, the water content is in excess of that (approximately 7%) which provides an oxygen permeability less than 0.1.

Water-absorbing agents, sometimes called desiccants, extract water from their surroundings. We have determined that the incorporation of appropriate water-absorbing agents, hereinafter referred to as drying agents, in a multi-layer film structure can maintain an adequately low moisture content in a moisture sensitive layer. In particular, we have determined that the incorporation of drying agents in the adhesive layers 4, 5 adjacent to the barrier layer 3 of EVOH will preserve the oxygen barrier quality of EVOH by maintaining the water activity of the EVOH at a level below 0.8 or 0.9 (which corresponds to a water content of between 6 and 7 percent) to thereby keep the oxygen permeability below about 0.1.

Figure 4 is a generalized isotherm for hydrate-forming drying agents such as sodium phosphate-dibasic and calcium chloride. The drying capacity (c, where c = wt. of water/wt. of agent) of the substance is plotted against the water activity (a) of the surroundings. When the surroundings are air, the water activity is usually expressed as relative humidity (R.H.). No water is taken up until the humidity or water activity reaches a value $a_1$ at which the first hydrate forms. In the case of calcium chloride the first hydrate occurs at less than 2 percent R.H. (a<0.02). Water is taken up until point $c_1$ which represents completion of the first hydrate. No further water is taken up until the humidity or water activity reaches the value $a_2$ where the second hydrate forms and takes up water to the point $c_2$. This process continues through as many hydrates as the substance forms at which point ($a_s$) the substance begins to dissolve and a saturated solution is formed. The saturated solution will then continue to take up water to the limit of saturation ($c_s$) and beyond.

Figure 5 represents an isotherm of a drying agent which forms no hydrates. Common salt (NaCl) is typical of this class. Common salt will absorb no water at a humidity below about 75 percent. When the relative humidity reaches 75 percent, a saturated solution is formed which continues to take up water.

Figure 6 represents an isotherm of a water soluble drying agent such as gelatin which absorbs water at all water activities. At high water activities it dissolves and the solution continues to take up water.

Figure 7 represents an isotherm of a water insoluble drying agent such as bentonite clay or silica gel which absorbs water at all water activities. No solution is formed with these agents and further adsorption ceases when their interstices are filled.

From the foregoing description of drying agents with reference to Figures 4 to 7, it can be observed that different materials act differently to extract water from their surroundings. Moreover, the absorption isotherm for a particular material depends upon temperature. Most available data are reported for room temperature. A particular material may act quite differently at elevated temperatures such as are encountered during retorting of foods. For example, although sodium phosphate-di-basic has three hydrates at room temperature, it forms none It 250°F (121°C).

Table I reports several drying agents which, at adequate loading (that is concentration in the adhesive) resulted in favorable oxygen permeabilities after at least a two hour retort at 250°F (121°C). The agents were incorporated in the adhesive layers 4 and 5 of a multi-layer structure. Prior to use, the agents were comminuted in a Waring Blender and then screened. The agents and adhesive were compounded by melt blending with the adhesive polymeric material. The permeability data for the drying agents are averages of several determinations. The EVOH used was GLD. The adhesive was Plexar III. The olefin was a high density polyethylene (HDPE).

TABLE I

| Agent | Weight percent of agent in adhesive | EVOH | Thickness, mil (mm) adhesive | Olefin | Oxygen permeability |
|---|---|---|---|---|---|
| none | 0 | 1.6 (0.041) | 2.6 (0.066) | 15 (0.381) | 1.6-2.5*** |
| CaCl₂ | 23.4 | 1.6 | 2.6 | 17 (0.431) | <0.02 |
| NaCl | 19.5 | 1.7 (0.043) | 2.4 (0.061) | 14.7 (0.373) | 0.08 |
| NH₄Cl | 20.2 | 1.7 | 2.8 (0.071) | 15 | 0.05 |
| Na₂HPO₄ | 20.7 | 1.6 | 2.6 | 15 | 0.03 |
| Na₂HPO₄* | 2.5 | 1.7 | 2.5 (0.063) | 15 | 1.80*** |
| Na₂HPO₄* | 10.5 | 1.7 | 2.5 | 15 | 0.02 |
| Sucrose | 40 | 1.8 (0.046) | 3.0 (0.076) | 14.6 (0.371) | <0.02 |
| Sucrose | 22.5 | 1.8 | 2.8 | 15 | <0.02 |
| Sucrose | 5 | 1.8 | 2.5 | 15 | 0.20 |
| K₂CO₃ | 18.3 | 1.8 | 2.9 (0.074) | 14.5 (0.368) | <0.02 |
| KAl(SO₄)₂ | 24 | 1.6 | 2.3 (0.058) | 14.7 | 0.02 |
| MgSO₄ | 21.7 | 1.6 | 2.6 | 14.4 (0.366) | <0.02 |
| KBr** | 17.5 | 1.7 | 2.8 | 14.9 (0.378) | 0.11 |
| MgCl₂ | 20 | 1.8 | 2.5 | 15 | <0.02 |
| (NH₄)₂SO₄ | 20.5 | 1.9 (0.048) | 2.5 | 15 | 0.12 |
| NaNO₃ | 20 | 1.6 | 2.5 | 15 | <0.02 |
| NH₄H₂PO₄ | 25.2 | 1.6 | 2.7 (0.068) | 14.7 | 0.11 |
| NaCl + NH₄Cl | 10.10 | 1.7 | 2.7 | 15 | 0.03 |
| Na₂HPO₄ + NH₄Cl | 10.10 | 1.9 | 2.5 | 15 | <0.02 |

\* 3 hr. retort at 250°F (121°C)
\*\* 2.25 hr. retort at 250°F (121°C)
\*\*\* Comparison

Table II reports several other candidate materials which were not as effective as those in Table I. The structures were otherwise similar to those of Table I.

TABLE II

| Agent | Weight percent agent in adhesive | EVOH | Thickness, mil (mm) adhesive | Olefin | Oxygen permeability |
|---|---|---|---|---|---|
| CaO | 15 | 1.6 (0.041) | 2.8 (0.071) | 14.8 (0.376) | 0.84*** |
| KNO₃ | 20.8 | 1.65 (0.042) | 2.5 (0.063) | 15 (0.381) | 0.35 |
| CaSO₄ | 24.6 | 1.5 (0.038) | 2.6 (0.066) | 14.8 | 2.4*** |
| molecular sieve (Linde 4A) | 20 | 1.6 | 2.7 (0.068) | 14.6 (0.371) | 1.35*** |
| bentonite clay | 20 | 1.7 (0.043) | 2.8 | 14.8 | 0.51*** |
| Na₂SO₄ | 20.6 | 1.6 | 2.5 | 14.6 | 0.99*** |

\*\*\* Comparison

Desirable drying agents should have sufficient drying capacity (c) at the water activity above which EVOH loses its oxygen barrier quality. Potassium nitrate is an example of a material which has no drying capacity at a water activity below about 0.85 (see Fig. 1). Therefore, according to our investigation even the use of large quantities of this material will not provide the EVOH with an oxygen permeability better than 0.35, see Table II. Further, desirable drying agents should have sufficient drying capacity to protect the EVOH at reasonable quantities or loadings or the agent. Molecular sieves, calcium sulphate (Drierite) and bentonite clay are examples of candidate materials which, at reasonable loadings, result in relatively high oxygen permeability. Still further, desirable drying agents generally should have more drying capacity at higher water activities than at lower water activities to avoid premature exhaustion. Calcium oxide is as active as 0.01 (water activity) as it is at 0.9 and therefore soon exhausts its drying capacity, so that this agent is not suitable to provide for prolonged storage.

Sucrose at 5 percent and sodium phosphate-di-basic at 2.5 percent are examples of drying agents inadequate at insufficient loadings but which are effective at higher loadings.

Many sugars are effective drying agents for multi-layer structures because they have high drying capacities at a water activity level which preserves the oxygen barrier quality of EVOH. Some sugars, such as sucrose galactose, glucose and maltose, are more effective after heating. For example, sucrose when heated to 350°F (176.6°C) for up to 40 minutes becomes effective. Such heating occurs during melt blending with the polymer.

Considerations in selection of drying agents include the ability to compound the drying agent with the polymer and to process the compound at the temperature dictated by the polymer. Calcium chloride, while very effective as a drying agent, is difficult to process because it normally contains at least the first hydrate which forms below 2 percent R.H. When the polymer is extruded or otherwise malt processed, water of hydration in calcium chloride compounded therewith is driven off and causes bubbles to form in the polymer.

The quantity of drying agent required is in part dictated by the need to have the drying agent still active alter retorting. Too small a quantity may exhaust its drying capacity. Generally, drying agents are less expensive than the polymer with which they are compounded which encourages high loading of the polymer with agent. However, excessive loading may cause various problems such as interference with the adhesion of the polymer to the other layers.

Studies were made comparing identical rigid multi-layer polyolefin containers having a 2.0 mil (0.051 mm) EVOH buried layer where one group of containers was retorted and the other not. After the containers reached moisture equilibrium, the oxygen permeability was measured. The oxygen permeability of those having a history of retorting was higher. This leads to the conclusion that the properties of EVOH are not entirely restored by extracting moisture. Thus, it appears that it is more desirable to prevent the intrusion of moisture into the EVOH during retorting than to extract the moisture subsequently. It can be concluded that drying agents which are active under retort conditions have advantages. Potassium carbonate, sodium nitrate and ammonium chloride are examples of agents which are active during retorting.

The terms "drying agent" or "water absorbing agent" include mixtures of two or more agents and include mixtures of agents in which one member is more active during retorting than the other(s). Some mixtures have demonstrated better performance than do the components of the mixture separately (see Table I).

Rigid containers comprising inner and outer layers of a blend of polypropylene and polyethylene, adhesive layers of Plexar® (modified polyolefin) and an innermost barrier layer of EVOH were formed in the shape of cans and a metal end was double seamed on the open end by conventional canning techniques. The containers were retorted for 2 hours at 250°F (121°C). The containers were stored at room temperature with 100 percent R.H. inside and 75 percent outside. Those containers having drying agents in the adhesive layer showed superior oxygen barrier after storage. Drying agents are desirable even for containers not subject to retorting, Containers without drying agents, when stored under the above conditions, show a threefold increase in permeability after 100 days, whereas those having drying agents show no increase.

The structural layers outside the barrier and the adhesive layers serve as moisture barriers. Where the structural layers are relatively thick (polyolefin layer about 15 mils (0.381 mm)) the rate of moisture transmission is low, lessening the demands made upon the drying agent. Consequently, there is a wide range of adequate drying agent materials.

The thinner structural layers used in films, pouches, or bags transmit more moisture and, therefore, impose greater demands upon the drying agent. For non-retorted thin packages, the drying agents should have a relatively high drying capacity in the range from about 0.5 to 0.8 water activity. Sodium chloride, sodium phosphate-di-basic and ammonium chloride are good choices. For thin retorted packages, a drying agent which is relatively inactive under retort conditions, but as high drying capacity subsequent to retorting is desired. Sodium phosphate-di-basic is effective because it exhibits no hydrates at 250°F (121°C) but forms hydrates at room temperature. (See Figure 4). Although the drying agents have been employed in the adhesive layers adjacent to the barrier layer, it is apparent that the layer containing the drying agent can be separated from the barrier layer by an intervening layer if that intervening layer is thin enough to allow moisture passage, or if that layer is a moisture permeable material such as nylon.

While the foregoing specification is written in terms of multi-layer polymeric structures for food packaging, the invention is applicable to multilayer structures for other purposes where maintenance of barrier properties of a moisture sensitive layer is important.

## Claims

1. A multi-layer laminate structure for retortable packaging, comprising an ethylene-vinyl alcohol copolymer layer the oxygen permeability of which increases substantially upon moisture entering the polymer, characterised in that the barrier polymer layer is an interior layer of the structure and a water soluble water absorbing agent is dispersed in another polymeric layer of the structure, which agent, after retorting a package made from the structure for at least two hours at 250°F (121°C), maintains an oxygen permeability of the barrier polymer layer of no more than 0.35 ml per day per 100 sq. inches (645 cm²) when the pressure gradient is one atmosphere of oxygen per mil (0.025 mm) of thickness of said barrier polymer layer.

2. A structure according to claim 1, characterised in that the said agent has a substantial drying capacity at a water activity level up to 0.8 to 0.9.

3. A structure according to claim 1, characterised in that the barrier polymer is ethylene-vinyl alcohol copolymer and the said agent has a substantial drying capacity at a water activity of about 0.8 to 0.9.

4. A structure according to claim 1, characterised in that the said agent has a substantial drying capacity at a water activity level in the range of 0.5 to 0.8.

5. A structure according to claim 1, 2 or 3, characterised in that the said agent has a substantial drying capacity at a water activity below about 0.85 and a greater drying capacity at this water activity level than at lower water activities.

6. A structure according to any of claims 1 to 5, characterised by the said agent being dispersed in more than one interior polymeric layer of the structure.

7. A structure according to claim 6, characterised in that the barrier layer (3) is adhered to exterior layers (1, 2) of a structural polymer by intermediate layers (4, 5) of an adherent polymer, the intermediate polymer layers containing the said agent.

8. A structure according to claim 7, characterised in that the exterior layers (1, 2) are of polyolefin, and the intermediate layers (4, 5) are of adherent modified polyolefin.

9. A structure according to any of claims 1 to 8, characterised in that the said agent is capable of maintaining the oxygen permeability of the barrier polymer layer at 0.23 ml or below, for example 0.1 ml or less, per 100 sq. inches (645 cm²) per day when the pressure gradient is one atmosphere of oxygen per mil (0.025 mm) of thickness of the barrier polymer layer.

10. A structure according to any of claims 1 to 8, wherein the said agent is selected from calcium chloride, sodium chloride, sodium phosphate-di-basic, ammonium chloride, sucrose, potassium carbonate, potassium aluminium sulphate, magnesium sulphate, magnesium chloride, sodium nitrate, ammonium sulphate, ammonium phosphate-monobasic, potassium bromide and mixtures of two or more of the foregoing.

11. A multi-layer laminate structure for retortable packaging, comprising an ethylene-vinyl alcohol copolymer layer the oxygen permeability of which increases substantially upon moisture entering the polymer, characterised in that the barrier polymer layer is an interior layer of the structure and a water soluble water absorbing agent is incorporated in a layer of the structure, which agent, after retorting a package made from the structure for at least two hours at 250°F (121°C), maintains an oxygen permeability of the barrier polymer layer of no more than 0.35 ml per day per 100 sq. inches (645 cm²) when the pressure gradient is one atmosphere of oxygen per mil (0.025 mm) of thickness of said barrier polymer layer.

## Patentansprüche

1. Mehrschichtlaminatstruktur zur retortenfähigen Verpackung, umfassend eine Ethylenvinylalkoholcopolymerschicht, deren Sauerstoffpermeabilität beim Eintritt von Feuchtigkeit in das Polymer beträchtlich zunimmt, dadurch gekennzeichnet, daß die Sperrpolymerschicht eine Innenschicht der Struktur ist und ein wasserlösliches, wasserabsorbierendes Agens in einer weiteren Polymerschicht der Struktur dispergiert ist, wobei das Agens nach der Retortenbehandlung einer aus der Struktur hergestellten Verpakkung für wenigstens zwei Stunden bei 250 °F (121 °C) eine Sauerstoffpermeabilität der Sperrpolymerschicht von nicht mehr als 0,35 ml pro Tag pro 100 Quadratzoll (645 cm²) aufrechterhält, wenn der Druckgradient eine Atmosphäre Sauerstoff pro mil (0,025 mm) Dicke der Sperrpolymerschicht beträgt.

2. Struktur nach Anspruch 1, dadurch gekennzeichnet, daß das Agens eine Haupttrocknungskapazität bei einem Wasseraktivitätsniveau von bis zu 0,8 bis 0,9 besitzt.

3. Struktur nach Anspruch 1, dadurch gekennzeichnet, daß das Sperrpolymer Ethylenvinylalkoholcopolymer ist und das Agens eine Haupttrocknungskapazität bei einer Wasseraktivität von etwa 0,8 bis 0,9 besitzt.

4. Struktur nach Anspruch 1, dadurch gekennzeichnet, daß das Agens eine Haupttrocknungskapazität bei einem Wasseraktivitätsniveau im Bereich von 0,5 bis 0,8 besitzt.

5. Struktur nach Anspruch 1, 2 oder 3, dadurch gekennzeichnet, daß das Agens eine Haupttrocknungskapazität bei einer Wasseraktivität unter etwa 0,85 und eine größere Trocknungskapazität bei diesem Wasseraktivitätsniveau als bei niedrigeren Wasseraktivitäten besitzt.

6. Struktur nach einem der Ansprüche 1 bis 5, dadurch gekennzeichnet, daß das Agens in mehr als einer inneren Polymerschicht der Struktur dispergiert ist.

7. Struktur nach Anspruch 6, dadurch gekennzeichnet, daß die Sperrschicht (3) an Außenschichten (1, 2) eines Strukturpolymers durch Zwischenschichten (4, 5) eines klebenden Polymers angeklebt ist, wobei die Zwischenpolymerschichten das Agens enthalten.

8. Struktur nach Anspruch 7, dadurch gekennzeichnet, daß die Außenschichten (1, 2) aus Polyolefin und die Zwischenschichten (4, 5) aus klebefähigem, modifiziertem Polyolefin bestehen.

9. Struktur nach einem der Ansprüche 1 bis 8, dadurch gekennzeichnet, daß das Agens in der Lage ist, die Sauerstoffpermeabilität der Sperrpolymerschicht auf 0,23 ml oder darunter, beispielsweise 0,1 ml oder weniger pro 100 Quadratzoll (645 cm²) pro Tag zu halten, wenn der Druckgradient eine Atmosphäre Sauerstoff pro mil (0,025 mm) Dicke der Sperrpolymerschicht beträgt.

10. Struktur nach einem der Ansprüche 1 bis 8, wobei das Agens ausgewählt ist aus Calciumchlorid, Natriumchlorid, zweibasigem Natriumphosphat, Ammoniumchlorid, Sucrose, Kaliumcarbonat, Kaliumaluminiumsulfat, Magnesiumsulfat, Magnesiumchlorid, Natriumnitrat, Ammoniumsulfat, einbasigem Ammoniumphosphat, Kaliumbromid und Mischungen zweier oder mehrerer der vorstehenden Stoffe.

11. Mehrschichtlaminatstruktur zur retortenfähigen Verpackung, umfassend eine Ethylenvinylalkoholcopolymerschicht, deren Sauerstoffpermeabilität beim Eintritt von Feuchtigkeit in das Polymer beträchtlich zunimmt, dadurch gekennzeichnet, daß die Sperrpolymerschicht eine Innenschicht der Struktur ist und ein wasserlösliches, wasserabsorbierendes Agens in einer Schicht der Struktur inkorporiert ist, wobei das Agens nach der Retortenbehandlung einer aus der Struktur hergestellten Verpackung für wenigstens zwei Stunden bei 250 °F (121 °C) eine Sauerstoffpermeabilität der Sperrpolymerschicht von nicht mehr als 0,35 ml pro Tag pro 100 Quadratzoll (645 cm²) aufrechterhält, wenn der Druckgradient eine Atmosphäre Sauerstoff pro mil (0,025 mm) Dicke der Sperrpolymerschicht beträgt.

**Revendications**

1. Structure stratifiée multicouche, pour la production d'un emballage apte à l'autoclavage, comprenant une couche d'un copolymère éthylène-alcool vinylique dont la perméabilité à l'oxygène croît notablement lorsque de l'humidité pénètre dans le polymère, caractérisée en ce que la couche polymérique d'arrêt est une couche intérieure de la structure et un agent hydrosoluble absorbant l'eau est dispersé dans une autre couche polymérique de la structure, agent qui, après autoclavage d'un emballage produit à partir de la structure pendant au moins deux heures à 250 °F (121 °C), maintient une perméabilité à l'oxygène de la couche polymérique d'arrêt non supérieure à 0,35 ml par jour par 100 in² (645 cm²) lorsque le gradient de pression est d'une atmosphère d'oxygène par mil (0,025 mm) d'épaisseur de ladite couche polymérique d'arrêt.

2. Structure suivant la revendication 1, caractérisée en ce que ledit agent a une capacité importante de déshydratation pour une activité en eau dont le niveau atteint 0,8 à 0,9.

3. Structure suivant la revendication 1, caractérisée en ce que le polymère d'arrêt est un copolymère d'éthylène et d'alcool vinylique et ledit agent a une capacité importante de déshydratation pour une activité en eau d'environ 0,8 à 0,9.

4. Structure suivant la revendication 1, caractérisée en ce que ledit agent a une capacité importante de déshydratation pour une activité en eau dont le niveau se situe dans l'intervalle de 0,5 à 0,8.

5. Structure suivant la revendication 1, 2 ou 3, caractérisée en ce que ledit agent a une capacité importante de déshydratation pour une activité en eau inférieure à environ 0,85 et une capacité de déshydratation plus grande pour ce niveau d'activité en eau que pour de plus faibles activités en eau.

6. Structure suivant l'une quelconque des revendications 1 à 5, caractérisée en ce que ledit agent est dispersé dans plus d'une couche polymérique interne de la structure.

7. Structure suivant la revendication 6, caractérisée en ce que la couche d'arrêt (3) adhère à des couches externes (1,2) d'un polymère structural au moyen de couches intermédiaires (4,5) d'un polymère adhérent, les couches polymériques intermédiaires contenant ledit agent.

8. Structure suivant la revendication 7, caractérisée en ce que les couches externes (1,2) sont en polyoléfine et les couches intermédiaires (4,5) sont en une polyoléfine modifiée adhérente.

9. Structure suivant l'une quelconque des revendications 1 à 8, caractérisée en ce que ledit agent est capable de maintenir la perméabilité à l'oxygène de la couche polymérique d'arrêt à 0,23 ml ou au-dessous, par exemple à 0,1 ml ou moins, par 100 in² (645 cm²) par jour lorsque le gradient de pression est d'une atmosphère d'oxygène par mil (0,025 mm) d'épaisseur de la couche polymérique d'arrêt.

10. Structure suivant l'une quelconque des revendications 1 à 8, dans laquelle ledit agent est choisi entre le chlorure de calcium, le chlorure de sodium, le monohydrogénophosphate de sodium, le chlorure d'ammonium, le saccharose, le carbonate de potassium, le sulfate double de potassium et d'aluminium, le sulfate de magnésium, le chlorure de magnésium, le nitrate de sodium, le sulfate d'ammonium, le dihydrogénophosphate d'ammonium, le bromure de potassium et des mélanges de deux ou plus de deux de ces substances.

11. Structure stratifiée multicouche, pour la production d'un emballage apte à l'autoclavage, comprenant une couche d'un copolymère éthylène-alcool vinylique, dont la perméabilité à l'oxygène croît notablement lorsque de l'humidité pénètre dans le polymère, caractérisée en ce que la couche polymérique d'arrêt est une couche interne de la structure et un agent hydrosoluble absorbant l'eau est incorporé à une couche de la structure, agent qui, après autoclavage d'un emballage produit à partir de la structure pendant au moins deux heures à 250°F (121°C), maintient une perméabilité à l'oxygène de la couche polymérique d'arrêt n'excédant pas 0,35 ml par jour par 100 in² (645 cm²) lorsque le gradient de pression est d'une atmosphère d'oxygène par mil (0,025 mm) d'épaisseur de ladite couche polymérique d'arrêt.

Fig. 1.

Fig.2.

WATER CONTENT (%)

RETORT TIME (hr.) AT 250°F (121°C)

Fig.3.

FIG. 4.

FIG. 6.

FIG. 5.

FIG. 7.